(19) Europäisches Patentamt
European Patent Office
Office européen des brevets

(11) **EP 1 887 381 A1**

(12) **EUROPÄISCHE PATENTANMELDUNG**

(43) Veröffentlichungstag:
**13.02.2008 Patentblatt 2008/07**

(51) Int Cl.:
***G01S 11/14*** *(2006.01)* ***G01P 5/24*** *(2006.01)*

(21) Anmeldenummer: **06016829.1**

(22) Anmeldetag: **11.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Delphi Technologies, Inc.
Troy, Michigan 48007 (US)**

(72) Erfinder: **Freese, Wolfgang J. F., Dr.
51789 Lindlar (DE)**

(74) Vertreter: **Manitz, Finsterwald & Partner GbR
Postfach 31 02 20
80102 München (DE)**

(54) **Verfahren und Vorrichtung zur Bestimmung der Geschwindigkeit eines Fahrzeugs**

(57) Es wird ein Verfahren zur Bestimmung der Geschwindigkeit eines Fahrzeugs, insbesondere eines Zweirades, eines Kraftfahrzeuges oder dergleichen, beschrieben, bei dem mittels eines bezüglich des Fahrzeugs ortsfesten ersten Ultraschallempfängers über eine vorgebbare erste Strecke hinweg und mittels eines bezüglich des Fahrzeugs ortsfesten zweiten Ultraschallempfängers über eine vorgebbare zweite Strecke hinweg von einem jeweiligen, bezüglich des Fahrzeugs ortsfesten Ultraschallsender Ultraschallsignale empfangen werden, die sich über die beiden Strecken ergebenden Laufzeiten der betreffenden Ultraschallsignale gemessen werden und über die gemessenen, mit der Schallgeschwindigkeit und der Fahrzeuggeschwindigkeit korrelierten Laufzeiten, die jeweilige Länge der vorgebbaren Strecken und die jeweilige Richtung der vorgebbaren Strecken die Fahrzeuggeschwindigkeit ermittelt wird.

EP 1 887 381 A1

**Beschreibung**

Die Erfindung betrifft ein Verfahren sowie eine Vorrichtung zur Bestimmung der Geschwindigkeit eines Fahrzeuges, insbesondere eines Zweirades, eines Kraftfahrzeugs oder dergleichen.

Bisher war es allgemein üblich, die Fahrzeuggeschwindigkeit über die Drehbewegung der Fahrzeugräder, beispielsweise über eine mechanische Kopplung mit diesen oder dergleichen, zu bestimmen.

Der Erfindung liegt die Aufgabe zugrunde, ein verbessertes Verfahren sowie eine verbesserte Vorrichtung der eingangs genannten Art zu schaffen, mit denen eine einfache und zuverlässige Bestimmung der Fahrzeuggeschwindigkeit ermöglicht wird, ohne dass dazu die Drehbewegung der Fahrzeugräder erfasst werden muss. Zudem soll gleichzeitig mit der Ermittlung der Fahrzeuggeschwindigkeit auch die Ermittlung der Schallgeschwindigkeit ermöglicht werden, die je nach Temperatur unterschiedlich sein kann.

Erfindungsgemäß wird diese Aufgabe gelöst durch ein Verfahren zur Bestimmung der Geschwindigkeit eines Fahrzeuges, insbesondere eines Zweirades, eines Kraftfahrzeuges oder dergleichen, bei dem mittels eines bezüglich des Fahrzeugs ortsfesten ersten Ultraschallempfängers über eine vorgebbare erste Strecke hinweg und mittels eines bezüglich des Fahrzeugs ortsfesten zweiten Ultraschallempfängers über eine vorgebbare zweite Strecke hinweg von einem jeweiligen, bezüglich des Fahrzeugs ortsfesten Ultraschallsender Ultraschallsignale empfangen werden, die sich über die beiden Strecken ergebenden Laufzeiten der betreffenden Ultraschallsignale gemessen werden und über die gemessenen, mit der Schallgeschwindigkeit und der Fahrzeuggeschwindigkeit korrelierten Laufzeiten, die jeweilige Länge der vorgebbaren Strecken und die jeweilige Richtung der vorgebbaren Strecken die Fahrzeuggeschwindigkeit ermittelt wird.

Aufgrund dieser Ausgestaltung kann gleichzeitig mit der Fahrzeuggeschwindigkeit auch die Schallgeschwindigkeit ermittelt werden. Eine Erfassung der Drehbewegung der Fahrzeugräder ist nicht mehr erforderlich. Die Fahrzeuggeschwindigkeit bzw. die Schallgeschwindigkeit kann vielmehr auf der Basis der Laufzeiten der Ultraschallsignale und einer insbesondere durch die Positionierung der Ultraschallsender und Ultraschallempfänger gegebenen speziellen Geometrie ermittelt werden.

Bevorzugt wird also über die gemessenen, mit der Schallgeschwindigkeit und der Fahrzeuggeschwindigkeit korrelierten Laufzeiten, die jeweilige Länge der vorgebbaren Strecken und die jeweilige Richtung der vorgebbaren Strecken auch die Schallgeschwindigkeit ermittelt.

Als Ultraschallsignale werden bevorzugt Ultraschallimpulse verwendet.

Dabei werden vorteilhafterweise kurze Ultraschallimpulse mit einer jeweiligen Pulsdauer $\Delta T \ll D1/c$ bzw. $\Delta T \ll D2/c$ verwendet, wobei D1 die Länge der vorgebbaren ersten Strecke, D2 die Länge der vorgebbaren zweiten Strecke und c die Schallgeschwindigkeit ist.

Die beiden bezüglich des Fahrzeugs jeweils ortsfesten Ultraschallempfänger werden bevorzugt an unterschiedlichen Orten positioniert.

Gemäß einer bevorzugten praktischen Ausgestaltung des erfindungsgemäßen Verfahrens werden den beiden Ultraschallempfängern getrennte, vorzugsweise jedoch zumindest im Wesentlichen am selben Ort des Fahrzeugs positionierte Ultraschallsender zugeordnet.

Zweckmäßigerweise verlaufen die beiden Strecken jeweils linear und in unterschiedlichen Richtungen.

Eine bevorzugte praktische Ausgestaltung des erfindungsgemäßen Verfahrens zeichnet sich dadurch aus, dass die vorgebbare erste Strecke allgemein in Richtung der Fahrzeuggeschwindigkeit verläuft oder mit dieser einen Winkel $\alpha$ einschließt, für den gilt: $0° \leq \alpha < 90°$, vorzugsweise $0° \leq \alpha < 45°$.

Die vorgebbare zweite Strecke verläuft vorzugsweise allgemein in einer zur Fahrzeuggeschwindigkeit senkrechten Richtung oder sie schließt mit dieser einen Winkel $\alpha + \delta$ ein, für den gilt: $0° \leq \alpha + \delta < 90°$, vorzugsweise $0° \leq \alpha + \delta < 45°$.

Gemäß einer bevorzugten praktischen Ausgestaltung des erfindungsgemäßen Verfahrens wird die Fahrzeuggeschwindigkeit über die folgende Beziehung ermittelt:

$$v = (a^2 - b^2)/(2 \cdot a \cdot b \cdot (b \cdot \cos(\alpha) - a \cdot \sin(\alpha))),$$

mit $a = T1/D1$ und $b = T2/D2$,
wobei T1 die sich über die vorgebbare erste Strecke ergebende Laufzeit, D 1 die Länge dieser ersten Strecke, T2 die sich über die vorgebbare zweite Strecke ergebende Laufzeit, D2 die Länge dieser zweiten Strecke, $\alpha$ der Winkel zwischen der ersten Strecke und der Richtung der Fahrzeuggeschwindigkeit und $\alpha + \delta$ der Winkel zwischen der zweiten Strecke und der zur Fahrzeuggeschwindigkeit senkrechten Richtung ist.

Die Schallgeschwindigkeit wird bevorzugt über die folgende Beziehung ermittelt:

$$c = \sqrt{(a^2 + b^2) \cdot (a^2 + b^2 - 4 \cdot a \cdot b \cdot \cos(\alpha + \delta) \cdot \sin(\alpha + \delta))}$$
$$/(2 \cdot a \cdot b \cdot (b \cdot \cos(\alpha + \delta) - a \cdot \sin(\alpha + \delta))),$$

*mit* $\alpha = T1/D1$ *und* $b = T2/D2$,

wobei T1 die sich über die vorgebbare erste Strecke ergebende Laufzeit, D1 die Länge dieser ersten Strecke, T2 die sich über die vorgebbare zweite Strecke ergebende Laufzeit, D2 die Länge dieser zweiten Strecke, $\alpha$ der Winkel zwischen der ersten Strecke und der Richtung der Fahrzeuggeschwindigkeit und $\alpha + \delta$ der Winkel zwischen der zweiten Strecke und der zur Fahrzeuggeschwindigkeit senkrechten Richtung ist.

Vorteilhafterweise wird zudem über die ermittelte Schallgeschwindigkeit die Lufttemperatur ermittelt.

Die weiter oben angegebene Aufgabe wird erfindungsgemäß überdies gelöst durch eine Vorrichtung zur Bestimmung der Geschwindigkeit eines Fahrzeuges, insbesondere eines Zweirades, eines Kraftfahrzeuges oder dergleichen, insbesondere zur Durchführung des erfindungsgemäßen Verfahrens, mit einem bezüglich des Fahrzeugs ortsfesten ersten Ultraschallempfänger und einem bezüglich des Fahrzeugs ortsfesten zweiten Ultraschallempfänger, die über eine vorgebbare erste Strecke bzw. eine vorgebbare zweite Strecke hinweg Ultraschallsignale von einem jeweiligen, bezüglich des Fahrzeugs ortsfesten Ultraschallsender empfangen, einer Einrichtung zum Messen der sich über die beiden Strecken ergebenden Laufzeiten der betreffenden Ultraschallsignale, sowie einer insbesondere elektronischen Auswerteeinrichtung zur Ermittlung der Fahrzeuggeschwindigkeit über die gemessenen, mit der Schallgeschwindigkeit und der Fahrzeuggeschwindigkeit korrelierten Laufzeiten, die jeweilige Länge der vorgebbaren Strecken und die jeweilige Richtung der vorgebbaren Strecken.

Bevorzugte Ausführungsformen der erfindungsgemäßen Vorrichtung sind in den Unteransprüchen angegeben.

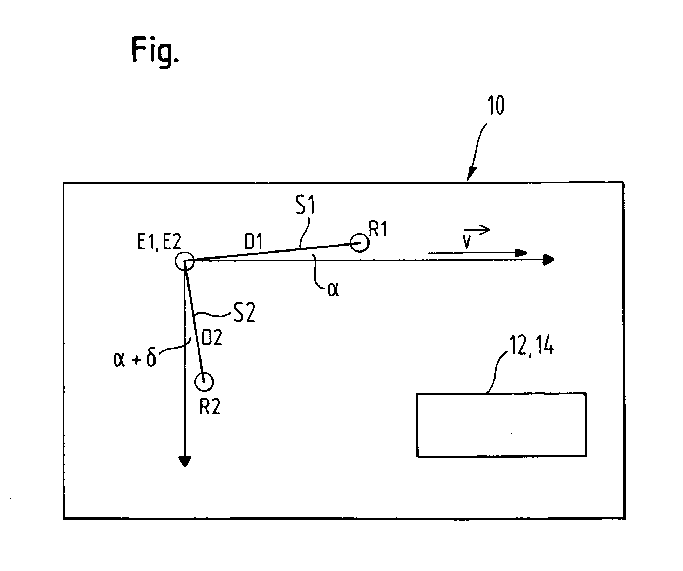

Die Erfindung wird im Folgenden anhand eines Ausführungsbeispiels unter Bezugnahme auf die Zeichnung näher erläutert.

Die einzige Figur der Zeichnung zeigt in rein schematischer Darstellung eine Vorrichtung 10 zur Bestimmung der Geschwindigkeit eines Fahrzeugs, bei dem es sich beispielsweise um ein Zweirad, ein Kraftfahrzeug oder dergleichen handeln kann.

Die Vorrichtung 10 umfasst einen Aufbau mit einem bezüglich des betreffenden Fahrzeugs ortsfesten ersten Ultraschallempfänger R 1 und einem bezüglich des Fahrzeugs ortsfesten zweiten Ultraschallempfänger R2, die über eine vorgebbare erste Strecke S 1 bzw. eine vorgebbare zweite Strecke S2 hinweg Ultraschallsignale von einem jeweiligen, bezüglich des Fahrzeugs ortsfesten Ultraschallsender E1, E2 empfangen.

Zudem umfasst die Vorrichtung 10 eine Einrichtung 12 zum Messen der sich über die beiden Strecken S1, S2 ergebenden Laufzeiten T1, T2 der betreffenden Ultraschallsignale sowie eine insbesondere elektronische Auswerteeinrichtung 14 zur Ermittlung der Fahrzeuggeschwindigkeit v über die gemessenen, mit der Schallgeschwindigkeit c und der Fahrzeuggeschwindigkeit v korrelierten Laufzeiten T1, T2, die jeweilige Länge D1, D2 der vorgebbaren Strecken S1, S2 und die jeweilige Richtung der vorgebbaren Strecken S1, S2.

Die elektronische Auswerteeinrichtung 14 kann über die gemessenen, mit der Schallgeschwindigkeit c und der Fahrzeuggeschwindigkeit v korrelierten Laufzeiten T1, T2, die jeweilige Länge D1, D2 der vorgebbaren Strecken S1, S2 und die jeweilige Richtung der vorgebbaren Strecken S1, S2 insbesondere auch die Schallgeschwindigkeit c ermitteln.

Die Ultraschallsignale sind durch kurze Ultraschallimpulse gebildet, die bevorzugt eine jeweilige Pulsdauer $\Delta T \ll D1/c$ bzw. $\Delta T \ll D2/c$ besitzen, wobei D 1 die Länge der vorgebbaren ersten Strecke S1, D2 die Länge der vorgebbaren zweiten Strecke S2 und c die Schallgeschwindigkeit ist.

Wie anhand der einzigen Figur zu erkennen ist, sind die beiden bezüglich des Fahrzeugs jeweils ortsfesten Ultraschallempfänger R1, R2 an unterschiedlichen Orten positioniert.

Beim vorliegenden Ausführungsbeispiel sind den beiden Ultraschallempfängern R1, R2 getrennte, zumindest im Wesentlichen am selben Ort des Fahrzeugs positionierte Ultraschallsender E1, E2 zugeordnet. Der Ultraschallempfänger R 1 empfängt also Signale vom Ultraschallsender E1, während der Ultraschallempfänger R2 Signale vom Ultraschallsender E2 empfängt.

Wie der einzigen Figur zudem entnommen werden kann, verlaufen die beiden Strecken S1, S2 linear und in unterschiedlichen Richtungen.

Die vorgebbare erste Strecke S 1 verläuft allgemein in Richtung der Fahrzeuggeschwindigkeit v, oder sie schließt mit dieser einen Winkel $\alpha$ ein, für den insbesondere gilt: $0° \leq \alpha < 90°$, vorzugsweise $0° \leq \alpha < 45°$.

Dagegen verläuft die vorgebbare zweite Strecke allgemein in einer zur Fahrzeuggeschwindigkeit v senkrechten Richtung, oder sie schließt mit dieser einen Winkel $\alpha + \delta$ ein, für den insbesondere gilt: $0° \leq \alpha + \delta < 90°$, vorzugsweise $0° \leq \alpha + \delta < 45°$.

Ein jeweiliger kurzer, vom Ultraschallsender E1 erzeugter Ultraschallimpuls wird also über die Strecke S 1 der Länge D 1 vom Ultraschallempfänger R 1 empfangen, während ein vom Ultraschallsender E2 erzeugter kurzer Ultraschallimpuls über die Strecke S2 der Länge D2 vom Ultraschallempfänger R2 empfangen wird. Die Laufzeit zwischen der Ausstrahlung und dem Empfang ist T1 bzw. T2.

Grundsätzlich können die Positionen für die Ultraschallempfänger R1 und R2 beliebig gewählt werden, solange die gemessenen Laufzeiten zur Erzielung plausibler Ergebnisse geeignet sind. Ein besonders einfacher und entsprechend vorteilhafter Aufbau ergibt sich beispielsweise dann, wenn die folgenden Beziehungen erfüllt sind: $\alpha = \delta = 0$ und D 1 = D2.

Mit einer solchen Vorrichtung 10 bzw. einem solchen Aufbau kann mittels kurzer Ultraschallimpulse also sowohl die Fahrzeuggeschwindigkeit v als auch die Schallgeschwindigkeit ermittelt werden.

Die Einrichtung 12 zur Messung der Laufzeiten T1, T2 sowie die Auswerteeinrichtung 14 können Teil eines intelligenten Systems sein, das beispielsweise einen eingebauten Controller oder dergleichen umfassen kann.

Die von den beiden Ultraschallsendern E1, E2 ausgesandten kurzen Ultraschallimpulse können gleicher Art oder auch unterschiedlich sein.

Die gemessenen Laufzeiten T1 und T2 sind mit der Schallgeschwindigkeit c und der Fahrzeuggeschwindigkeit v, mit der auch der die beiden Ultraschallsender E1, E2 sowie die beiden Ultraschallempfänger R1, R2 umfassende Ultraschallsensor bewegt wird, korreliert. Dabei sei angenommen, dass zumindest die Fahrzeuggeschwindigkeit während einer jeweiligen Messung konstant und linear ist, d.h. sich der Geschwindigkeitsvektor während einer jeweiligen Messung nicht dreht.

Wie bereits erwähnt, ergeben sich besonders einfache Verhältnisse in dem Fall, dass die folgenden Beziehungen gelten: $\alpha = \delta = 0$ und D1 = D2. In der Praxis können insbesondere Toleranzen eine Abweichung des Systems von dieser Konstellation mit sich bringen.

Aus dem in der einzigen Figur dargestellten Aufbau ergeben sich die folgenden Beziehungen:

$$T1 = \sqrt{(D1 \cdot \cos(\alpha) + v \cdot T1)^2 + (D1 \cdot \sin(\alpha))^2} / c$$

$$T2 = \sqrt{(D2 \cdot \sin(\alpha + \delta) + v \cdot T2)^2 + (D2 \cdot \cos(\alpha + \delta))^2} / c \, ,$$

wobei T1 die sich über die vorgebbare erste Strecke S 1 ergebende Laufzeit, v die Fahrzeuggeschwindigkeit, D 1 die Länge dieser ersten Strecke S1, T2 die sich über die vorgebbare zweite Strecke S2 ergebende Laufzeit, D2 die Länge dieser zweiten Strecke S2, $\alpha$ der Winkel zwischen der ersten Strecke S 1 und der Richtung der Fahrzeuggeschwindigkeit v und $\alpha + \delta$ der Winkel zwischen der zweiten Strecke S2 und der zur Fahrzeuggeschwindigkeit v senkrechten Richtung ist.

Daraus folgt:

$$T1 = D1 \cdot (v \cdot \cos(\alpha) + \sqrt{c^2 - v^2 \cdot \sin^2(\alpha)}) / (c^2 - v^2)$$

$$T2 = D2 \cdot (v \cdot \sin(\alpha + \delta) + \sqrt{c^2 - v^2 \cdot \cos^2(\alpha + \delta)}) / (c^2 - v^2) \, .$$

Nach einer entsprechenden Umformung der voran gehenden Beziehungen kann mittels der Auswerteeinrichtung 14 die Fahrzeuggeschwindigkeit v somit über die folgende Beziehung

$$v = (a^2 - b^2) / (2 \cdot a \cdot b \cdot (b \cdot \cos(\alpha) - a \cdot \sin(\alpha))),$$

mit a = T1/D1 und b = T2/D2,
und die Schallgeschwindigkeit c über die folgende Beziehung ermittelt werden:

$$c = \sqrt{(a^2 + b^2) \cdot (a^2 + b^2 - 4 \cdot a \cdot b \cdot \cos(\alpha + \delta) \cdot \sin(\alpha + \delta))}$$
$$/(2 \cdot a \cdot b \cdot (b \cdot \cos(\alpha + \delta) - a \cdot \sin(\alpha + \delta))),$$

*mit* $\alpha = T1/D1$ *und* $b = T2/D2$.

Mit dem in der einzigen Figur angegebenen einfachen Aufbau kann also sowohl die Schallgeschwindigkeit c als auch die Fahrzeuggeschwindigkeit v, mit der auch der die Ultraschallsender E1, E2 und die Ultraschallempfänger R1, R2 umfassende Sensor bewegt wird, mittels kurzer Ultraschallimpulse bestimmt werden. Zudem kann die Schallgeschwindigkeit c dazu herangezogen werden, die aktuelle Lufttemperatur zu ermitteln.

Für den Fall, dass $\alpha = 0°$, $\delta = 0°$ und D1 = D2 = D gilt, kann die Fahrzeuggeschwindigkeit v über die Beziehung

$$v = D \cdot (T1/(T2)^2 - 1/T1)/2$$

und die Schallgeschwindigkeit über die Beziehung

$$c = D \cdot (T1/(T2)^2 + 1/T1)/2$$

ermittelt werden.

Bezugszeichenliste

10    Vorrichtung
12    Messeinrichtung
14    Auswerteeinrichtung

E1    erster Ultraschallsender
E2    zweiter Ultraschallsender
R1    erster Ultraschallempfänger
R2    zweiter Ultraschallempfänger
S1    erste Strecke
S2    zweite Strecke

**Patentansprüche**

1. Verfahren zur Bestimmung der Geschwindigkeit eines Fahrzeuges, insbesondere eines Zweirades, eines Kraftfahrzeuges oder dergleichen, bei dem mittels eines bezüglich des Fahrzeugs ortsfesten ersten Ultraschallempfängers (R1) über eine vorgebbare erste Strecke (S1) hinweg und mittels eines bezüglich des Fahrzeugs ortsfesten zweiten Ultraschallempfängers (R2) über eine vorgebbare zweite Strecke (S2) hinweg von einem jeweiligen, bezüglich des Fahrzeugs ortsfesten Ultraschallsender (E1, E2) Ultraschallsignale empfangen werden, die sich über die beiden Strecken (S1, S2) ergebenden Laufzeiten (T1, T2) der betreffenden Ultraschallsignale gemessen werden und über die gemessenen, mit der Schallgeschwindigkeit (c) und der Fahrzeuggeschwindigkeit (v) korrelierten Laufzeiten (T1, T2), die jeweilige Länge (D1, D2) der vorgebbaren Strecken (S1, S2) und die jeweilige Richtung der vorgebbaren Strecken (S1, S2) die Fahrzeuggeschwindigkeit (v) ermittelt wird.

2. Verfahren nach Anspruch 1,
**dadurch gekennzeichnet,**
**dass** über die gemessenen, mit der Schallgeschwindigkeit (c) und der Fahrzeuggeschwindigkeit (v) korrelierten Laufzeiten (T1, T2), die jeweilige Länge (D1, D2) der vorgebbaren Strecken (S1, S2) und die jeweilige Richtung der vorgebbaren Strecken (S1, S2) auch die Schallgeschwindigkeit (c) ermittelt wird.

3. Verfahren nach Anspruch 1 oder 2,
   **dadurch gekennzeichnet,**
   **dass** als Ultraschallsignale Ultraschallimpulse verwendet werden.

4. Verfahren nach Anspruch 3,
   **dadurch gekennzeichnet,**
   **dass** kurze Ultraschallimpulse mit einer jeweiligen Pulsdauer $\Delta T \ll D1/c$ bzw. $\Delta T \ll D2/c$ verwendet werden, wobei D 1 die Länge der vorgebbaren ersten Strecke (S1), D2 die Länge der vorgebbaren zweiten Strecke (S2) und c die Schallgeschwindigkeit ist.

5. Verfahren nach einem der vorhergehenden Ansprüche,
   **dadurch gekennzeichnet,**
   **dass** die beiden bezüglich des Fahrzeugs jeweils ortsfesten Ultraschallempfänger (R1, R2) an unterschiedlichen Orten positioniert werden.

6. Verfahren nach einem der vorhergehenden Ansprüche,
   **dadurch gekennzeichnet ,**
   **dass** den beiden Ultraschallempfängern (R1, R2) getrennte, vorzugsweise jedoch zumindest im Wesentlichen am selben Ort des Fahrzeugs positionierte Ultraschallsender (E1, E2) zugeordnet werden.

7. Verfahren nach einem der vorhergehenden Ansprüche,
   **dadurch gekennzeichnet,**
   **dass** die beiden Strecken (S1, S2) jeweils linear verlaufen.

8. Verfahren nach einem der vorhergehenden Ansprüche,
   **dadurch gekennzeichnet,**
   **dass** die vorgebbare erste Strecke (S 1) und die vorgebbare zweite Strecke (S2) in unterschiedlichen Richtungen verlaufen.

9. Verfahren nach Anspruch 8,
   **dadurch gekennzeichnet,**
   **dass** die vorgebbare erste Strecke (S 1) allgemein in Richtung der Fahrzeuggeschwindigkeit (v) verläuft oder mit dieser einen Winkel $\alpha$ einschließt, für den gilt: $0° \leq \alpha < 90°$, vorzugsweise $0° \leq \alpha < 45°$.

10. Verfahren nach Anspruch 8 oder 9,
    **dadurch gekennzeichnet,**
    **dass** die vorgebbare zweite Strecke (S2) allgemein in einer zur Fahrzeuggeschwindigkeit (v) senkrechten Richtung verläuft oder mit dieser einer Winkel $\alpha + \delta$ einschließt, für den gilt: $0° \leq \alpha + \delta < 90°$, vorzugsweise $0° \leq \alpha+\delta < 45°$.

11. Verfahren nach einem der vorhergehenden Ansprüche,
    **dadurch gekennzeichnet,**
    **dass** die Fahrzeuggeschwindigkeit (v) über die folgende Beziehung ermittelt wird:

$$v = (a^2 - b^2)/(2 \cdot a \cdot b \cdot (b \cdot \cos(\alpha) - a \cdot \sin(\alpha))),$$

mit a = T1/D1 und b = T2/D2,
wobei T 1 die sich über die vorgebbare erste Strecke (S1) ergebende Laufzeit, D 1 die Länge dieser ersten Strecke (S 1), T2 die sich über die vorgebbare zweite Strecke (S2) ergebende Laufzeit, D2 die Länge dieser zweiten Strecke (S2), $\alpha$ der Winkel zwischen der ersten Strecke (S1) und der Richtung der Fahrzeuggeschwindigkeit (v) und $\alpha + \delta$ der Winkel zwischen der zweiten Strecke (S2) und der zur Fahrzeuggeschwindigkeit (v) senkrechten Richtung ist.

12. Verfahren nach einem der vorhergehenden Ansprüche,
    **dadurch gekennzeichnet,**

**dass** die Schallgeschwindigkeit (c) über die folgende Beziehung ermittelt wird:

$$c = \sqrt{(a^2 + b^2) \cdot (a^2 + b^2 - 4 \cdot a \cdot b \cdot \cos(\alpha + \delta) \cdot \sin(\alpha + \delta))}$$
$$/(2 \cdot a \cdot b \cdot (b \cdot \cos(\alpha + \delta) - a \cdot \sin(\alpha + \delta))),$$

mit $\alpha = T1/D1$ und $b = T2/D2$,

wobei T 1 die sich über die vorgebbare erste Strecke (S1) ergebende Laufzeit, D 1 die Länge dieser ersten Strecke (S1), T2 die sich über die vorgebbare zweite Strecke (S2) ergebende Laufzeit, D2 die Länge dieser zweiten Strecke (S2), $\alpha$ der Winkel zwischen der ersten Strecke (S1) und der Richtung der Fahrzeuggeschwindigkeit (v) und $\alpha + \delta$ der Winkel zwischen der zweiten Strecke (S2) und der zur Fahrzeuggeschwindigkeit (v) senkrechten Richtung ist.

**13.** Verfahren nach einem der vorhergehenden Ansprüche,
**dadurch gekennzeichnet,**
**dass** über die ermittelte Schallgeschwindigkeit (c) die Lufttemperatur ermittelt wird.

**14.** Vorrichtung (10) zur Bestimmung der Geschwindigkeit eines Fahrzeuges, insbesondere eines Zweirades, eines Kraftfahrzeuges oder dergleichen, insbesondere zur Durchführung des Verfahrens nach einem der vorhergehenden Ansprüche, mit einem bezüglich des Fahrzeugs ortsfesten ersten Ultraschallempfänger (R1) und einem bezüglich des Fahrzeugs ortsfesten zweiten Ultraschallempfänger (R2), die über eine vorgebbare erste Strecke (S1) bzw. eine vorgebbare zweite Strecke (S2) hinweg Ultraschallsignale von einem jeweiligen, bezüglich des Fahrzeugs ortsfesten Ultraschallsender (E1, E2) empfangen, einer Einrichtung (12) zum Messen der sich über die beiden Strecken (S1, S2) ergebenden Laufzeiten (T1, T2) der betreffenden Ultraschallsignale, sowie einer insbesondere elektronischen Auswerteeinrichtung (14) zur Ermittlung der Fahrzeuggeschwindigkeit (v) über die gemessenen, mit der Schallgeschwindigkeit (c) und der Fahrzeuggeschwindigkeit (v) korrelierten Laufzeiten (T1, T2), die jeweilige Länge (D1, D2) der vorgebbaren Strecken (S1, S2) und die jeweilige Richtung der vorgebbaren Strecken (S1, S2).

**15.** Vorrichtung nach Anspruch 14,
**dadurch gekennzeichnet,**
**dass** die elektronische Auswerteeinrichtung (14) über die gemessenen, mit der Schallgeschwindigkeit (c) und der Fahrzeuggeschwindigkeit (v) korrelierten Laufzeiten (T1, T2), die jeweilige Länge (D1, D2) der vorgebbaren Strecken (S1, S2) und die jeweilige Richtung der vorgebbaren Strecken (S 1, S2) auch die Schallgeschwindigkeit (c) ermittelt.

**16.** Vorrichtung nach Anspruch 14 oder 15,
**dadurch gekennzeichnet,**
**dass** die Ultraschallsignale durch Ultraschallimpulse gebildet sind.

**17.** Vorrichtung nach einem der vorhergehenden Ansprüche,
**dadurch gekennzeichnet,**
**dass** die Ultraschallsignale durch kurze Ultraschallimpulse mit einer jeweiligen Pulsdauer $\Delta T \ll D1/c$ bzw. $\Delta T \ll D2/c$ gebildet sind, wobei D 1 die Länge der vorgebbaren ersten Strecke (S1), D2 die Länge der vorgebbaren zweiten Strecke (S2) und c die Schallgeschwindigkeit ist.

**18.** Vorrichtung nach einem der vorhergehenden Ansprüche,
**dadurch gekennzeichnet,**
**dass** die beiden bezüglich des Fahrzeugs jeweils ortsfesten Ultraschallempfänger (R1, R2) an unterschiedlichen Orten positioniert sind.

**19.** Vorrichtung nach einem der vorhergehenden Ansprüche,
**dadurch gekennzeichnet,**
**dass** den beiden Ultraschallempfängern (R1, R2) getrennte, vorzugsweise jedoch zumindest im Wesentlichen am selben Ort des Fahrzeugs positionierte Ultraschallsender (E1, E2) zugeordnet sind.

**20.** Vorrichtung nach einem der vorhergehenden Ansprüche,
**dadurch gekennzeichnet,**
**dass** die beiden Strecken (S1, S2) jeweils linear verlaufen.

**21.** Vorrichtung nach einem der vorhergehenden Ansprüche,
**dadurch gekennzeichnet,**
**dass** die vorgebbare erste Strecke (S1) allgemein in Richtung der Fahrzeuggeschwindigkeit (v) verläuft oder mit dieser einen Winkel ($\alpha$) einschließt, für den gilt: $0° \leq \alpha < 90°$, vorzugsweise $0° \leq \alpha < 45°$.

**22.** Vorrichtung nach einem der vorhergehenden Ansprüche,
**dadurch gekennzeichnet,**
**dass** die vorgebbare zweite Strecke (S2) allgemein in einer zur Fahrzeuggeschwindigkeit (v) senkrechten Richtung verläuft oder mit dieser einer Winkel ($\alpha + \delta$) einschließt, für den gilt: $0° \leq \alpha + \delta < 90°$, vorzugsweise $0° \leq \alpha+\delta < 45°$.

**23.** Vorrichtung nach einem der vorhergehenden Ansprüche,
**dadurch gekennzeichnet,**
**dass** die elektronische Auswerteeinrichtung (14) die Fahrzeuggeschwindigkeit (v) über die folgende Beziehung ermittelt:

$$v = (a^2 - b^2)/(2 \cdot a \cdot b \cdot (b \cdot \cos(\alpha) - a \cdot \sin(\alpha))),$$

mit a = T1/D1 und b = T2/D2,
wobei T1 die sich über die vorgebbare erste Strecke (S1) ergebende Laufzeit, D 1 die Länge dieser ersten Strecke (S1), T2 die sich über die vorgebbare zweite Strecke (S2) ergebende Laufzeit, D2 die Länge dieser zweiten Strecke (S2), $\alpha$ der Winkel zwischen der ersten Strecke (S1) und der Richtung der Fahrzeuggeschwindigkeit (v) und $\alpha + \delta$ der Winkel zwischen der zweiten Strecke (S2) und der zur. Fahrzeuggeschwindigkeit (v) senkrechten Richtung ist.

**24.** Vorrichtung nach einem der vorhergehenden Ansprüche,
**dadurch gekennzeichnet,**
**dass** die elektronische Auswerteeinrichtung (14) die Schallgeschwindigkeit (c) über die folgende Beziehung ermittelt:

$$c = \sqrt{(a^2 + b^2) \cdot (a^2 + b^2 - 4 \cdot a \cdot b \cdot \cos(\alpha + \delta) \cdot \sin(\alpha + \delta))}$$
$$/(2 \cdot a \cdot b \cdot (b \cdot \cos(\alpha + \delta) - a \cdot \sin(\alpha + \delta))),$$

*mit $\alpha$ = T1/D1 und b = T2/D2,*
wobei T1 die sich über die vorgebbare erste Strecke (S1) ergebende Laufzeit, D 1 die Länge dieser ersten Strecke (S 1), T2 die sich über die vorgebbare zweite Strecke (S2) ergebende Laufzeit, D2 die Länge dieser zweiten Strecke (S2), $\alpha$ der Winkel zwischen der ersten Strecke (S1) und der Richtung der Fahrzeuggeschwindigkeit (v) und $\alpha + \delta$ der Winkel zwischen der zweiten Strecke (S2) und der zur Fahrzeuggeschwindigkeit (v) senkrechten Richtung ist.

**25.** Vorrichtung nach einem der vorhergehenden Ansprüche,
**dadurch gekennzeichnet ,**
**dass** die elektronische Auswerteeinrichtung (14) über die ermittelte Schallgeschwindigkeit (c) die Lufttemperatur ermittelt.

# Fig.

**Europäisches Patentamt**

## EUROPÄISCHER RECHERCHENBERICHT

**Nummer der Anmeldung**

EP 06 01 6829

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 361 333 C (ATLAS-WERKE AKT.-GES) 13. Oktober 1922 (1922-10-13) * das ganze Dokument * ----- | 1-12, 14-24 | INV. G01S11/14 G01P5/24 |
| X | US 2 699 677 A (MCCALLUM DONALD MURDO ET AL) 18. Januar 1955 (1955-01-18) * Spalte 1, Zeile 15 - Spalte 4, Zeile 85; Abbildungen 1,2,20,21 * ----- | 1-25 | |
| X | US 3 222 926 A (CARVER THURMAN W) 14. Dezember 1965 (1965-12-14) * Spalte 1, Zeile 68 - Spalte 5, Zeile 33; Abbildungen 1,2 * ----- | 1,3-11, 14,16-23 | |
| X | US 4 031 756 A (ROTIER ET AL) 28. Juni 1977 (1977-06-28)  * das ganze Dokument * ----- | 1-3,5-8, 13-16, 18-20,25 | |
| X | US 3 548 653 A (VICTOR B. COREY) 22. Dezember 1970 (1970-12-22) | 1,2, 5-12,14, 15,18-24 | |
| Y | * Spalte 1, Zeile 13 - Spalte 4, Zeile 74; Abbildungen 1,2 * ----- | 13,25 | |
| X | AT 384 110 B (LANGERSEK VLADIMIR ING) 12. Oktober 1987 (1987-10-12) * das ganze Dokument * ----- | 1,3-11, 14,16-23 | |
| X | US 3 782 193 A (MEYER T,US ET AL) 1. Januar 1974 (1974-01-01) * das ganze Dokument * ----- | 1,14 | |
| Y | EP 0 125 061 A (CENTRAL ELECTRICITY GENERATING BOARD) 14. November 1984 (1984-11-14) * Seite 3, Zeile 3 - Seite 4, Zeile 13; Abbildung 1 * ----- -/-- | 13,25 | |

**RECHERCHIERTE SACHGEBIETE (IPC)**

G01S
G01P

Der vorliegende Recherchenbericht wurde für alle Patentansprüche erstellt

| Recherchenort | Abschlußdatum der Recherche | Prüfer |
|---|---|---|
| München | 6. Oktober 2006 | Schmelz, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 06 01 6829

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 01/88550 A (ELECTRONICS FOR IMAGING, INC) 22. November 2001 (2001-11-22) * das ganze Dokument * ----- | 1,14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 6. Oktober 2006 | Schmelz, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 01 6829

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2006

| Im Recherchenbericht angeführtes Patentdokument | | Datum der Veröffentlichung | Mitglied(er) der Patentfamilie | | Datum der Veröffentlichung |
|---|---|---|---|---|---|
| DE 361333 | C | 13-10-1922 | NL | 7465 C | |
| US 2699677 | A | 18-01-1955 | GB | 666413 A | 13-02-1952 |
| US 3222926 | A | 14-12-1965 | GB | 953631 A | 25-03-1964 |
| US 4031756 | A | 28-06-1977 | KEINE | | |
| US 3548653 | A | 22-12-1970 | KEINE | | |
| AT 384110 | B | 12-10-1987 | AT | 350181 A | 15-02-1987 |
| US 3782193 | A | 01-01-1974 | AU | 476235 B2 | 16-09-1976 |
| | | | AU | 5580673 A | 21-11-1974 |
| | | | CA | 980002 A1 | 16-12-1975 |
| | | | CH | 569974 A5 | 28-11-1975 |
| | | | DE | 2328344 A1 | 13-12-1973 |
| | | | FR | 2188165 A1 | 18-01-1974 |
| | | | GB | 1371306 A | 23-10-1974 |
| | | | IT | 1010540 B | 20-01-1977 |
| | | | JP | 49063483 A | 19-06-1974 |
| | | | NL | 7307787 A | 10-12-1973 |
| | | | SE | 390844 B | 24-01-1977 |
| EP 0125061 | A | 14-11-1984 | GB | 2139352 A | 07-11-1984 |
| WO 0188550 | A | 22-11-2001 | AU | 6166701 A | 26-11-2001 |
| | | | EP | 1285276 A2 | 26-02-2003 |

Für nähere Einzelheiten zu diesem Anhang : siehe Amtsblatt des Europäischen Patentamts, Nr.12/82